Europäisches Patentamt

European Patent Office    (11) Publication number: **0 010 899**

Office européen des brevets    **B1**

(12)    **EUROPEAN PATENT SPECIFICATION**

(45) Date of publication of patent specification: **02.02.83**    (51) Int. Cl.³: **C 01 B 17/88, B 01 D 3/22**

(21) Application number: **79302235.1**

(22) Date of filing: **16.10.79**

(54) Process for concentrating dilute sulphuric acid in an evaporator.

(30) Priority: **16.10.78 US 951553**

(43) Date of publication of application:
**14.05.80 Bulletin 80/10**

(45) Publication of the grant of the patent:
**02.02.83 Bulletin 83/5**

(84) Designated Contracting States:
**BE CH DE FR GB NL SE**

(56) References cited:
**GB - A - 1 338 469**
**GB - A - 1 411 862**
**US - A - 3 191 662**
**US - A - 3 243 170**
**US - A - 3 713 786**
**US - A - 3 970 511**

(73) Proprietor: **AIR PRODUCTS AND CHEMICALS, INC.**
**P.O. Box 538**
**Allentown, Pennsylvania 18105 (US)**

(72) Inventor: **Vora, Suresh Mansukhlal**
**1210 Broad Street**
**5 Whitehall, Pennsylvania 18052 (US)**
Inventor: **Mazzafro, William Joseph**
**68 Crestwood Drive**
**Schnecksville, Pennsylvania 18078 (US)**
Inventor: **Brian, Pierre Leonce Thibaut**
**325 Lilac Road, Rd 7**
**Allentown, Pennsylvania 18103 (US)**
Inventor: **Chen, Michael S.K.**
**33 Aster Road**
**Macungie, Pennsylvania 18062 (US)**

(74) Representative: **Lucas, Brian Ronald**
**c/o Air Products Limited Hersham Place Molesey Road**
**Walton-on-Thames Surrey, KT12 4RZ (GB)**

Courier Press, Leamington Spa, England.

Process for concentrating dilute sulphuric acid in an evaporator

## Background of the invention
### 1. Field of the invention

This invention relates to an improved process for reducing solute concentration in a vapor stream and particularly to concentrating dilute solutions particularly of corrosive products.

### 2. Description of the prior art

US Patent 3,970,511 discloses a process for concentrating dilute solutions of corrosive products such as sulfuric or phosphoric acid. In the process the dilute solution is introduced into a tunnel in which it flows in a thin layer over successive cascades while being heated by an indirect radiant heating element.

US 3,191,662 discloses a continuous solution concentrator wherein feed is intro-duced into the top of an evaporator and pa· ed through a nozzle. The resulting droplets then are heated by a surface with evaporation of volatile solvent. Near the bottom of the evaporator there is a mist eliminator pad which serves to coalesce. the falling droplets and permit discharge from the column as a concentrated bottoms fraction.

UK Patent Specification 1,411,862 discloses an apparatus for concentrating aqueous phosphoric acid by blowing hot air through a body of the acid. The air leaving the liquid, together with water vapor and acid vapor, is passed upwardly through a mat of well tangled synthetic fibres where the acid is washed out by a stream of aqueous phosphoric acid introduced onto the top of the mat. Since the mat is composed of well tangled synthetic fibers there is a substantial pressure drop across the mat which must be paid for in operating costs.

US Patent 3,243,170 discloses various forms of knitted wine mesh packing which can be used in packed columns.

## Summary of the invention

In a basic process for concentrating a solution in an evaporator, the steps typically comprise: heating the solution to a temperature sufficient to evaporate volatile solvent, collecting the vapor rich in volatile solvent as an overhead fraction, and collecting a concentrated solution as a bottoms fraction. It has also been common practice to utilize a mist eliminator pad in the evaporator to reduce carry-over of entrained produce in the overhead. The entrained droplets coalesce on impingement with the pad ·and are then removed prior to discharge of the overhead fraction. The improvement constituting the basis of this invention, which serves to enhance the efficiency of the evaporator by reducing the quantity of vaporized product (solute) collected with the overhead vapor, comprises:

spraying a liquid selected from the group consisting of solvent or solution through the mist eliminator pad a rate of from 0.6—2.5 pounds (gm) liquid per pound (gm) of vapor, the liquid being sprayed substantially uniformly over the mist eliminator pad surface to provide a wetting rate of about 0.1—0.35 (0.068—0.238), preferably 0.15—0.25 gallons per minute per sq ft (0.102—0.170 l/sm²) of mist eliminator pad surface and utilizing as said mist eliminator pad, a knitted wire mesh mist eliminator pad having a wire diameter from 0.001—0.05" (0.025—1.27 mm) wire, an interfacial area from 50—200 ft²/ft³ (164—656 m²/m³), a void space of 90—99 percent and a thickness of from 4—16 inches (10—41 cm).

There are several advantages associated with using the mist eliminator pad of the : ∋ described as a medium for scrubbing proc. t from the vapor passing through the mist eliminator pad. These advantages include:

a simple and efficient method for reducing the quantity of solute product in the vapor overhead from the evaporator;

an ability to reduce the amount of product in the vapor with very low pressure drop and thus with low energy cost;

the ability to reduce the amount of product in the vapor overhead without a substantial energy cost due to an increased heat load in the evaporator;

an ability to utilize a unique scrubbing system which can be utilized in existing equipment, e.g. distillation columns and evaporators without resort to separate units; and

an ability to achieve good efficiency in removal of product with a very small amount of a "packing" material.

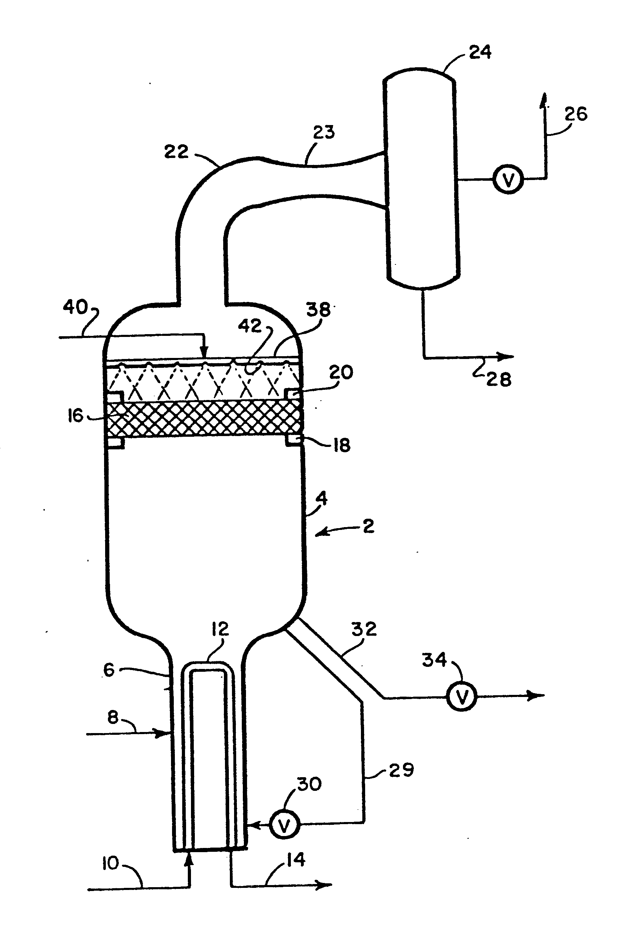

## The drawing

The figure is a cross-sectional view of an evaporator showing the combination of a mist eliminator pad and a spray device for effecting scrubbing of the vapor phase prior to collecting it as overhead product.

## Description of the preferred embodiments

The process of this invention for reducing solute concentrations in vapor streams can be utilized in many ways, e.g., concentrating a variety of solutions, particularly those where a solute product is dissolved in a volatile solvent, e.g. an organic solvent or water. However, the process has particular advantage in concentrating solutions of sulfuric acid in water and particularly at the higher concentrations, e.g., 81—91% (by weight), where sulfuric acid concentration in the overhead may range from 1—15% by weight.

To illustrate the usefulness of the process reference is made to the figure in describing the following concentration process. With respect to the figure, evaporator unit 2 has a body section 4 and a preheat section 6. Feed sulfuric acid, sulfuric acid being the solute and water the solvent, is introduced to evaporator 2 and to preheat section 6 through line 8. Steam is introduced through line 10 to coils 12 and then removed via line 14.

The evaporator is further characterized as having a mist eliminator pad 16 disposed in body 4, and is carried by supports 18 and 20. Its function is to effect coalescence of entrained droplets in the vapor phase prior to exhaustion of the vapor through overhead 22. A steam eductor 23 and condenser 24 (water lines now shown) are utilized to maintain a partial vacuum and facilitate removal of vapor. The vapor from evaporator 2 is condensed in condenser 24 with the vapor being exhausted through line 26 and liquid through line 28. A circulation cycle is maintained in the evaporator with preconcentrated liquid being passed from the body 4 to preheat section 6 via line 29 with the rate of circulation being controlled by valve 30. A concentrated product is removed from body 4 through line 32 with the rate being controlled by valve 34.

Although the above description of the evaporator and its operation are conventional to prior art concentration processes, it is the combination of a particular mist eliminator pad 16 and operation of flow distribution device 38 in accordance with this invention that permits enhanced recovery of product with minimal losses to overhead.

The mist eliminator pad is one which, of course, should be constructed of a material that is inert to the solution vapor or solvent. In the case of sulfuric acid, which is corrosive, the preferred material is tantalum. The mist eliminator pad preferably consists of a multi-filament, knitted wire mesh pad having a wire diameter of from 0.001—0.05 inches (0.025—1.27 mm), and preferably a diameter of about 0.004—0.006 inches (0.10—0.15 mm). In terms of properties, the mist eliminator pad has an interfacial area of from about 50—200 ft²/ft³ (164—656 m²/m³), a void space of about 90—99.7 percent, and a density of 3—40 lbs/ft³ (0.048—0.641 g/cm³). In a preferred case the pad is formed from a knitted tube which is flattened, crimped and then assembled into parallel layers of interlocked wire loops. The thickness of the mist eliminator pad can vary from about 4—16 inches (10—41 cm) but preferably a thickness of about 6—10 inch (15—25 cm) is used. Although most of the mist eliminator pads have a thickness of at least four inches (10 cm), it is conceivable that pads one or two inches (2.5 5.0 cm) thick could be used in combination to meet the thickness of 4—16 inches (10—41 cm). Accordingly, when used in combination, it is the combined total thickness that is deemed to be the thickness of the pad.

When the interfacial area falls below about 50 sq ft per cu ft of pad (164 m²/m³), there generally is insufficient surface area to permit removal of entrained droplets, and there is insufficient surface area to permit scrubbing contact with vaporized solute product. On the other hand, as the interfacial area exceeds about 200 ft² per cu ft of pad (656 m²/m³), the pressure drop becomes too high and thus results in increased energy consumption.

Scrubbing of the vapor stream to reduce solute product in the vapour is accomplished by means of a flow distributor 38. It comprises an elongated tube having a plurality of cross bars in ladder arrangement with a feed inlet 40 through which the scrubbing liquid is passed. A plurality of holes 42 are placed in the elongated tube and cross members for discharge of the scrubbing liquid (dashed line from holes 42). The flow distributor 38 can be of virtually any design, the important factor being that the liquid is uniformly sprayed over mist eliminator pad 16.

In the embodiment shown, the holes are substantially uniformly placed in flow distributor 38 for even distribution of liquid with a hole generally being placed approximately every 7—20 sq ft (0.65—1.86 m²) of pad surface. The hole diameter is determined by calculating the surface area of the pad and then determining how many holes are to be utilized. Uniform liquid distribution through each hole should be achieved, and this can be done by designing the hole diaemter so that the pressure drop of the scrubbing liquid through the hole is at least ten times that of the pressure required to establish the appropriate scrubbing liquid feed rate through feed inlet 40. Typically, in operation, the liquid rate through feed inlet 40 is from about 0.6—2.5 lbs (g) per lb (g) of vapor rising through mist eliminator pad 16. In a preferred case, the liquid rate is about 0.9—1.2 and, preferably, the rate is 1:1 as this is the level where minimum energy is required for the system. Thus, in many cases, the hole diameter will be from about 0.02—0.08 inches (0.51—2.03 mm) in diameter.

The liquid which can be used for scrubbing can be pure solvent or a solution of the solvent and solute product. Of course, as expected, the efficiency of the liquid for scrubbing is much greater when the concentration of solute product in the solvent is low. On the other hand, the heat load to the evaporator is increased as the concentration of the solution is reduced because of the increased concentration of solvent that must be evaporated. For purposes of sulfuric acid concentration from 88—93% (by weight), the liquid for scrubbing should be from about 60—75% (by weight) sulfuric acid. This feed concentration provides enough concentration gradient to establish good efficiency in scrubbing without encountering substantial heat load in the evaporator. However, as mentioned, the solvent or solution can be varied in concentration as desired.

The liquid passing through the flow distribution device can be directed in cocurrent or countercurrent relationship to the vapor flow through the pad. Preferably, the flow is countercurrent to the vapor flow as greater efficiency in separation is achieved.

The following examples are provided to illustrate preferred embodiments of the inventions are not intended to restrict the scope thereof.

Example 1

The process of this invention can be adapted to a conventional sulfuric acid concentration process as described. In a typical sulfuric acid concentration plant wherein the initial feed sulfuric acid is about 30 percent (by weight) and the final desired concentration is about 93—95 percent (by weight), multi-stage evaporators are utilized. Typically, these stages operate at pressures between 10 and 90 mm of Hg, and at temperatures from 250—320°F (121—161°C).

The last evaporator stage in the above-described sulfuric acid concentration process was modified as shown in the figure. That stage was adapted with a York 325 tantalum mist eliminator pad having a thickness of 8 inches (20 cm), a void space of 99%, and an interfacial surface area of 110 sq ft per cu ft (361 $m^2/m^3$). The York 325 mist eliminator pad is made of 0.005 inch (0.13 mm) diameter wire screen and is formed by knitting the wire into a tube, crimping and then forming into a segmented layer pad.

A flow distributor consisting of a central elongated tube with ladder tubes being placed perpendicular to the central elongated tube was constructed and mounted above the mist eliminator pad. The ladder tubes, of course, were cut to the appropriate dimension to form a circular structure and assure that the total surface of the mist eliminator could be sprayed uniformly with a scrubbing medium. The holes were placed to provide one hole per 9 sq inches (58 $cm^2$) of pad surface area.

A series of experiments were run and the results of the tests are given in Table 1. During the test period, a 70% (by weight) sulfuric acid feed was used to scrub the vapor prior to extrusion through overhead 22. The feed temperature, the spray rate in gallons per minute (l/s) (corresponds to a wetting rate in gpm (l/s) per square feet ($m^2$) of pad surface) and the liquid rate was varied. The feed sulfuric acid was about 89% (by weight). The results are shown in Table 1.

TABLE I

| Test | Feed Temp °F/°C | | Wetting Ratio gpm/ft² (l/s m²) pad surface | | L/G lb (g) liq/lb (g) vap | Expected (no scrubbing) lbs $H_2SO_4$/hr g $H_2SO_4$/s | | Measured lbs $H_2SO_4$/hr g $H_2SO_4$/S | | % Scrubbing |
|---|---|---|---|---|---|---|---|---|---|---|
| 1 | 90 | 32.22 | 0.085 | 0.058 | 0.8 | 229 | 28.85 | 98 | 12.35 | 57.2 |
| 2a | 92 | 33.33 | 0.13 | 0.088 | 1.0 | 272 | 34.27 | 69 | 8.69 | 74.6 |
| b | 92 | 33.33 | 0.13 | 0.088 | 0.9 | 320 | 40.32 | 64 | 8.06 | 80.0 |
| c | 92 | 33.33 | 0.13 | 0.088 | 1.1 | 321 | 40.45 | 66 | 8.32 | 79.4 |
| d | 96 | 35.56 | 0.13 | 0.088 | 1.2 | 262 | 33.01 | 30 | 3.78 | 88.6 |
| 3 | 92 | 33.33 | 0.195 | 0.132 | 1.8 | 189 | 23.81 | 64 | 8.06 | 66.1 |
| 4a | 92 | 33.33 | 0.255 | 0.173 | 2.1 | 288 | 36.29 | 66 | 8.32 | 77.1 |
| b | 92 | 33.33 | 0.255 | 0.173 | 2.4 | 260 | 32.76 | 60 | 7.56 | 76.9 |
| c | 92 | 33.33 | 0.255 | 0.173 | 1.8 | 310 | 39.06 | 87 | 10.96 | 71.9 |
| d | 92 | 33.33 | 0.26 | 0.177 | 1.5 | 325 | 40.95 | 51 | 6.43 | 84.3 |
| 5a | 138 | 58.89 | 0.085 | 0.058 | 0.6 | 362 | 45.61 | 145 | 18.27 | 60.0 |
| b | 138 | 58.89 | 0.085 | 0.058 | 0.6 | 360 | 45.36 | 159 | 20.03 | 55.8 |
| c | 132 | 55.56 | 0.085 | 0.058 | 0.7 | 327 | 41.20 | 60 | 7.56 | 81.7 |
| 6 | 138 | 58.89 | 0.13 | 0.088 | 1.0 | 338 | 42.59 | 65 | 8.19 | 80.8 |
| 7a | 138 | 58.89 | 0.195 | 0.132 | 1.4 | 325 | 40.95 | 66 | 8.31 | 79.7 |
| b | 138 | 58.89 | 0.195 | 0.132 | 1.4 | 342 | 43.09 | 72 | 9.07 | 78.9 |
| 8a | 138 | 58.89 | 0.255 | 0.173 | 2.1 | 256 | 32.26 | 58 | 7.31 | 77.3 |
| b | 138 | 58.89 | 0.255 | 0.173 | 1.9 | 315 | 39.69 | 67 | 8.44 | 78.7 |

As can be seen from the Table, scrubbing efficiency through the mist eliminator pad is extremely high ranging from about 55—90%. The preferred results are obtained where the flow rate is such to provide an L/G of about 0.9—1.2, (see Runs 2b, c and d). At this flow rate, the energy consumption is minimized since one lb (g) of liquid is being introduced for every lb (g) of vapor being removed. Run 6 is also exemplary of similar test conditions except there the feed temperature has been increased.

Quite surprisingly, scrubbing in the specified manner through the mist eliminator pad transformed the pad into a relatively efficient packed column which achieved substantial removal of the sulfuric acid solute from the vapor phase or rather achieved substantial scrubbing efficiency. By operating under the conditions shown, particularly at a wetting rate of about 0.13—0.2 gpm/ft² (0.088—0.136 l/s m²), the number of theoretical units (NTU) calculated was about 1.4. Thus, the height of the theoretical unit (HTU) of the pad was calculated to be about 5.6 inches (14 cm) which is extremely good.

The surprising factor about an HTU of 5.6 inches (14 cm) is that it was achieved with a "packing" of only 8 inches (20 cm) in thickness. Typically, in scrubbing operations utilizing a conventional packing material with conventional liquid loadings, an HTU of 5 to 6 inches (13—15 cm) is achieved when the packing is several feet thick. If the top 8 to 10 inch (20—25 cm) portion of these columns were evaluated the NTU would be a small fraction.

## Claims

1. In a process for concentrating an aqueous sulfuric acid feed solution in an evaporator which comprises the steps:

   (a) heating the solution to a temperature sufficient to form a vapor rich in water;

   (b) passing the vapor rich in water through a knitted wire mesh mist eliminator pad to remove entrained droplets from the vapor;

   (c) collecting the vapor rich in water from the mist eliminator pad as an overhead fraction; and

   (d) collecting a concentrated solution of sulphuric acid as a bottoms fraction;

the improvement for reducing the quantity of sulphuric acid carried over with the vapour as overhead which comprises:

   spraying a liquid selected from the group spraying a liquid selected from the group consisting of water and aqueous sulphuric acid through said mist eliminator pad, said mist eliminator pad being constructed of a material that is inert to sulphuric acid, at a rate of from 0.6—2.5 lbs. (g) liquid per pound (g) of vapor, said liquid being sprayed substantially uniformly over said pad to provide a wetting rate of 0.10—0.35 gallon per minute per ft² of mist eliminator pad surface area (0.068—0.238 l/s m²), said mist eliminator pad having a wire diameter of 0.001—0.05 inches (0.025—1.27 mm), an interfacial area from 50—200 ft²/ft³ (164—656 m²/m³), a void space from about 90—99.7 percent and a thickness of 4—16 inches (10—41 cm).

2. A process according to Claim 1, characterized in that said mist eliminator pad has a thickness of from 6—12 inches (15—31 cm) and segmented layer construction.

3. A process according to Claim 1 or 2, characterized in that said liquid is sprayed in countercurrent relationship to the vapor flow through the pad.

4. A process according to Claim 1, 2, 3 or 4 wherein aqueous sulphuric acid solution is utilized as said liquid in spraying the mist eliminator pad.

5. A process according to Claim 1, 2, 3 or 4, characterized in that the liquid spray rate is from 0.9—1.2 lbs (g) liquid per g of vapor passed through the mist eliminator pad.

6. A process according to Claim 1, 2, 3, 4 or 5, characterized in that said liquid is sprayed through a flow distributor utilizing a plurality of holes with one hole being positioned for every 7—20 square inches (45—129 cm²) of pad surface.

7. A process according to any preceding Claim, characterized in that said feed solution to be concentrated contains from 80—91 percent (by weight) sulphuric acid.

8. A process according to any preceding Claim, characterized in that said liquid utilized for spraying in countercurrent relationship to the vapor is aqueous sulphuric acid solution containing from 60—75 percent (by weight) sulfuric acid.

9. A process according to any preceding Claim, wherein the wire diameter in said mist eliminator pad is from about 0.004—0.006 inches (0.10—0.15 mm).

## Revendications

1. Dans un procédé pour concentrer une solution d'alimentation aqueuse d'acide sulfurique dans un évaporateur comprenant les stades de:

   (a) chauffage de la solution à une température suffisante pour former une vapeur riche en eau;

   (b) passage de la vapeur riche en eau à travers un tampon d'élimination de brouillard en toile métallique tricotée pour éliminer de la vapeur les gouttelettes entraînées;

   (c) recueil de la vapeur riche en eau du tampon d'élimination de brouillard comme fraction de tête; et

   (d) reuceil d'une solution concentrée d'acide sulfurique comme fraction de queue;

le perfectionnement pour réduire la quantité d'acide sulfurique entraînée avec la vapeur comme fraction de tête qui comprend:

la pulvérisation d'un liquide choisi parmi l'eau et l'acide sulfurique auqueus à travers ledit tampon d'élimination de brouillard, ledit tampon d'élimination de brouillard étant fait d'une matière qui est inerte vis-à-vis de l'acide sulfurique, à un débit de 0,6—2,5 g de liquide par g de vapeur, ledit liquide étant pulvérisé pratiquement uniformément sur ledit tampon pour que l'on obtienne un débit de mouillage de 0,068—0,238 l/s.m² de surface de tampon, ledit tampon d'élimination de brouillard ayant un diamètre du fil de 0,025—1,27 mm, une aire interfaciale de 164—656 m²/m³, un espace interstitiel d'environ 90—99,7% et une épaisseur de 10—41 cm.

2. Procédé selon la revendication 1, caractérisé en ce que ledit tampon d'élimination de brouillard a une épaisseur de 15—31 cm et une structure en couches segmentées.

3. Procédé selon l'une des revendications 1 ou 2, caractérisé en ce que ledit liquide est pulvérisé à contre-courant par rapport au passage de la vapeur à travers le tampon.

4. Procédé selon l'une quelconque des revendications 1, 2, 3 ou 4 dans lequel une solution aqueuse d'acide sulfurique est utilisée comme dit liquide dans la pulvérisation du tampon d'élimination de brouillard.

5. Procédé selon l'une quelconque des revendications 1, 2, 3 ou 4 caractérisé en ce que le débit de pulvérisation du liquide est de 0,9—1,2 g de liquide par g de vapeur traversant le tampon d'élimination de brouillard.

6. Procédé selon l'une quelconque des revendications 1, 2, 3, 4 ou 5 caractérisé en ce que ledit liquide est pulvérisé à travers un distributeur d'écoulement utilisant plusieurs trous, un trou étant disposé tous les 45—129 cm² de surface de tampon.

7. Procédé selon l'une quelconque des revendications précédentes, caractérisé en ce que ladite solution d'alimentation à concentrer contient 80—91% (en poids) d'acide sulfurique.

8. Procédé selon l'une quelconque des revendications précédentes caractérisé en ce que ledit liquide utilisé pour la pulvérisation à contre-courant par rapport à la vapeur est une solution aqueuse d'acide sulfurique contenant 60—75% (en poids) d'acide sulfurique.

9. Procédé selon l'une quelconque des revendications précédentes dans lequel le diamètre du fil dudit tampon d'élimination de brouillard est d'environ 0,10—0,15 mm.

**Patentansprüche**

1. Bei einem Verfahren zur Konzentrierung einer wässrigen Schwefelsäure-Einsatzlösung in einem Verdampfer, das die Stufen umfaßt:

a) Erhitzen der Lösung auf eine Temperatur, die ausreicht, einen wasserreichen Dampf zu bilden;

b) Durchleiten des wasserreichen Dampfes durch dass Kissen eines Nebelentferners aus einem gewirkten Drahtgeflecht zur Entfernung mitgerissener Tröpfchen aus dem Dampf;

c) Auffangen des wasserreichen Dampfes aus dem Nebelentferner-Kissen als eine Kopffraktion; und

d) Auffangen einer konzentrierten Lösung von Schwefelsäure als eine Bodenfraktion; die Verbesserung zur Verminderung der Menge an Schwefelsäure, die mit dem Dampf als Kopfprodukt mitgerissen wird, die umfaßt:

Sprühen einer Flüssigkeit, die aus der aus Wasser und wässriger Schwefelsäure bestehenden Gruppe ausgewählt ist, durch das genannte Nebelentferner-Kissen, wobei das genannte Nebelentferner-Kissen aus einem Material aufgebaut ist, das gegenüber Schwefelsäure inert ist, in einer Menge von 0,6 bis 2,5 lbs. (g) Flüssigkeit pro pound (g) Dampf, wobei die genannte Flüssigkeit im wesentlichen gleichförmig so über das Kissen gesprüht wird, daß eine Befeuchtungsmenge von 0,10 bis 0,35 Gallon pro Minute pro ft² der Oberfläche des Nebelentferner-Kissens (0,068 bis 0,238 l/sm²) erhalten wird, wobei das genannte Nebelentferner-Kissen einen Draht-Durchmesser von 0,001 bis 0,05 inches (0,025 bis 1,27 mm), eine Austauschfläche von 50 bis 200 ft²/ft³ (164—656 m²/m³), einen Hohlraumanteil von etwa 90 bis 99,7% und eine Dicke von 4 bis 16 inches (10 bis 41 cm) aufweist.

2. Ein Verfahren nach Anspruch 1, dadurch gekennzeichnet, daß das genannte Nebelentferner-Kissen eine Dicke von von 6 bis 12 inches (15 bis 31 cm) sowie einen segmentierten Schichtaufbau aufweist.

3. Ein Verfahren nach Anspruch 1 oder 2, dadurch gekennzeichnet, daß die genannte Flüssigkeit im Gegenstrom zu dem Dampfstrom durch das Kissen gesprüht wird.

4. Ein Verfahren nach Anspruch 1, 2, 3 oder 4, bei dem eine wässrige Schwefelsäurelösung als die genannte Flüssigkeit beim Besprühen des Nebelentferner-Kissens verwendet wird.

5. Ein Verfahren nach Anspruch 1, 2, 3 oder 4, dadurch gekennzeichnet, daß die Flüssigkeitsmenge beim Besprühen von 0,9 bis 1,2 lbs. (g) Flüssigkeit pro g an Dampf beträgt, der durch das Nebelentferner-Kissen hindurchtritt.

6. Ein Verfahren nach Anspruch 1, 2, 3, 4 oder 5, dadurch gekennzeichnet, daß die genannte Flüssigkeit durch einen Stromverteiler gesprüht wird, der von einer Vielzahl von Löchern Gebrauch macht, wobei alle 7 bis 20 square inches (45 bis 129 cm²) der Kissenoberfläche ein Loch angeordnet ist.

7. Ein Verfahren nach einem beliebigen vorangehenden Anspruch, dadurch gekennzeichnet, daß die zu konzentrierende Einsatzlösung von 80 bis 91% (Gewichts-%) Schwefelsäure enthält.

8. Ein Verfahren nach einem beliebigen vorangehenden Anspruch, dadurch gekennzeichnet, daß die zum Sprühen im Gegenstrom zu dem Dampf verwendete genannte Flüssigkeit ein wässrige Schwefelsäurelösung ist, die von 60 bis 75% (Gewichts-%) Schwefelsäure enthält.

9. Ein Verfahren nach einem beliebigen vorangehenden Anspruch, bei dem der Drahtdurchmesser in dem genannten Nebelentferner-Kissen von etwa 0,004 bis 0,006 inches (0,10 bis 0,15 mm) beträgt.